# EUROPEAN PATENT APPLICATION

(11) **EP 1 806 552 A2**
(43) Date of publication of application: **11.07.2007**
(21) Application number: 06008679.0
(22) Date of filing: 26.04.2006
(51) Int. Cl.: F25D 17/04

(54) **Refrigerator**

(30) Priority: 10.01.2006 KR 20060002917
(71) Applicant: Samsung Electronics Co., Ltd., Suwon-si, Gyeonggi-Do (KR)
(72) Inventor: Kim, Hye Ryung, Yongin-Si Gyeonggi-Do (KR); Park, Rae Eun, Bundang-Gu Seongnam-Si Gyeonggi-Do (KE); Kim, Chang Nyeun, Suwon-Si Gyeonggi-Do (KR); Kim, Kyung Hoon, Sanghyun-Dong Yongin-Si Gyeonggi-Do (KR)
(74) Representative: Grünecker, Kinkeldey, Stockmair & Schwanhäusser Anwaltssozietät

(57) **Abstract**

A refrigerator is disclosed wherein an ion generator (30) is arranged in a cold air duct (20) which supplies cold air to a storage compartment, and a desired portion of the cold air duct is treated for anti-static. The ions from the ion generator are used for the purpose of sterilization and deodorization and are effectively discharged into the storage compartment. The anti-static-treatment of the cold air duct prevents the ions generated from the ion generator from being lost due to static in the cold air duct. The anti-static treatment is carried out by coating polyethylene on a portion of the cold air duct. The cold air duct includes a plurality of uniformly spaced cold air outlets (21), whereby the ions generated from the ion generator are uniformly distributed into the overall portion of the storage compartment through the cold air outlets.

## Description

### BACKGROUND OF THE INVENTION

### 1. Field of the Invention

The invention relates to a refrigerator, and, more particularly to a refrigerator wherein an ion generator is arranged in a cold air duct which supplies cold air to a storage compartment of the refrigerator, and a desired portion of the cold air duct is treated for anti-static so that ions for sterilization and deodorization can be effectively discharged into the storage compartment.

lons are atoms that have either gained or lost an electron and bear a charge of energy. Negative ions ("ions") have an extra electron and their negative ion energy attracts airborne dust and particles. A high concentration of ions attracts and can remove unwanted airborne dust and particles.

### 2. Description of the Related Art

Generally, refrigerators are configured to maintain a storage compartment thereof such as a freezing compartment or a refrigerating compartment at an appropriate temperature for storage of food, and thus, to maintain the food stored in the storage compartment in a fresh state for a prolonged period of time. In such a refrigerator, uncooked vegetables, fruit, meat, fish, and diverse food ingredients and cooked food products may be stored. If the storage compartment is not periodically cleaned, the smell emitted from the stored food permeates the storage compartment. Furthermore, mold, bacteria, viruses, etc. may grow in the storage compartment and not only cause a sanitation problem, but are also being unpleasant to the user.

In order to solve such problems, a refrigerator has been proposed with a sterilizer and a deodorizer are arranged in a storage compartment, to remove bacteria and smell. An example of such a refrigerator is disclosed in Japanese Patent Laid-open Publication No. Heisei 6-82151.

The disclosed conventional refrigerator includes a sterilizing and deodorizing device, which includes a cover provided with an air inlet and an air outlet, to suck air from a storage compartment, and to discharge the sucked air into the storage compartment, a high-voltage generator, an ozone-generating electrode assembly, an ion-generating electrode assembly, and a blowing fan. In this refrigerator, air introduced into the interior of the cover is sterilized and deodorized by ozone in the cover, and is then discharged into the storage compartment. Thus, the circulating air in the storage compartment is cleaned.

However, the sterilizing and deodorizing device used in the conventional refrigerator is arranged between shelves in the storage compartment, so that air sterilized and deodorized by the device is discharged into the storage compartment only near the region between the shelves. For this reason, there is a problem with the sterilized and deodorized air that is locally distributed in the storage compartment and not spread throughout the entire area of the storage compartment, thus the entire are is not sterilized or deodorized.

Furthermore, the sterilizing and deodorizing device used in the conventional refrigerator cannot sterilize and deodorize air present in the storage compartment because the device is only capable of cleaning the air that passes directly through the device by the use of ozone. For this reason, it is impossible to sterilize and deodorize all of the air present in the storage compartment unless the air passes through the sterilizing and deodorizing device.

### SUMMARY OF THE INVENTION

Accordingly, it is an aspect of the invention to provide a refrigerator wherein an ion generator is arranged in a cold air duct, which supplies cold air to a storage compartment of the refrigerator, such that ions generated from the ion generator, can be uniformly discharged into the overall portion of the storage compartment through the cold air duct.

It is another aspect of the invention is to provide a refrigerator wherein a desired portion of a cold air duct, in which an ion generator is arranged, is treated for anti-static such that ions generated from the ion generator can be effectively transferred to a storage compartment for the refrigerator through the cold air duct.

Additional aspects and/or advantages of the invention will be set forth in part in the description which follows and, in part, will be apparent from the description, or may be learned by practice of the invention.

The foregoing and/or other aspects are achieved by a refrigerator including: at least one storage compartment; a cold air duct which is arranged in the storage compartment; a cooling fan, which discharges cold air into the cold air duct; and an ion generator, which generates ions, and is arranged in the cold air duct such that the ions are discharged into the storage compartment via the cold air duct.

The cold air duct may include an anti-static-treated portion to prevent the ions generated from the ion generator from being lost due to static electricity in the cold air duct.

The anti-static-treated portion of the cold air duct may extend from a point where a flow velocity of the cold air in the cold air duct is reduced from an initial velocity at a cold air inlet of the cold air duct by 25 % or more to a cold air outlet of the cold air duct.

The anti-static treatment may be carried out by coating a material having a surface resistance of 10⁵Ω/sq or less on the portion of the cold air duct.

The anti-static treatment may be carried out by coating polyethylene on the portion of the cold air duct.

The cold air duct may include a plurality of uniformly spaced cold air outlets, whereby the ions generated from the ion generator may be uniformly distributed into the overall portion of the storage compartment through the cold air outlets.

The cooling fan may be arranged at a lower portion of the storage compartment, whereas the ion generator may be arranged at a lower end of the cold air duct.

### BRIEF DESCRIPTION OF THE DRAWINGS

The above objects, and other features and advantages of the invention will become more apparent after reading the following detailed description when taken in conjunction with the drawings, in which:
FIG 1 is a front view of a refrigerator according to the invention wherein an ion generator is arranged in a cold air duct such that ions for sterilization and deodorization are discharged into a storage compartment through the cold air duct;
FIG 2 is an enlarged sectional view illustrating the cold air duct shown in FIG 1;
FIG 3 is a cross-sectional view taken along the line III - III of FIG. 1;
FIG. 4 is a table representing flow velocities of cold air respectively measured at various points of the cold air duct where the ion generator is arranged; and
FIG. 5 is a table representing a variation in the amount of discharged ions passing through the cold air duct, depending on the size of the area of the cooling duct, which was subjected to an anti-static treatment.

### DETAILED DESCRIPTION OF THE PREFERRED EMBODIMENTS

Reference will now be made in detail to the embodiments of the invention, examples of which are illustrated in the accompanying drawings, wherein like reference numerals refer to the like elements throughout. The embodiments are described below to explain the invention by referring to the figures.

Preferred embodiments of the invention will now be described in detail with reference to the annexed drawings.

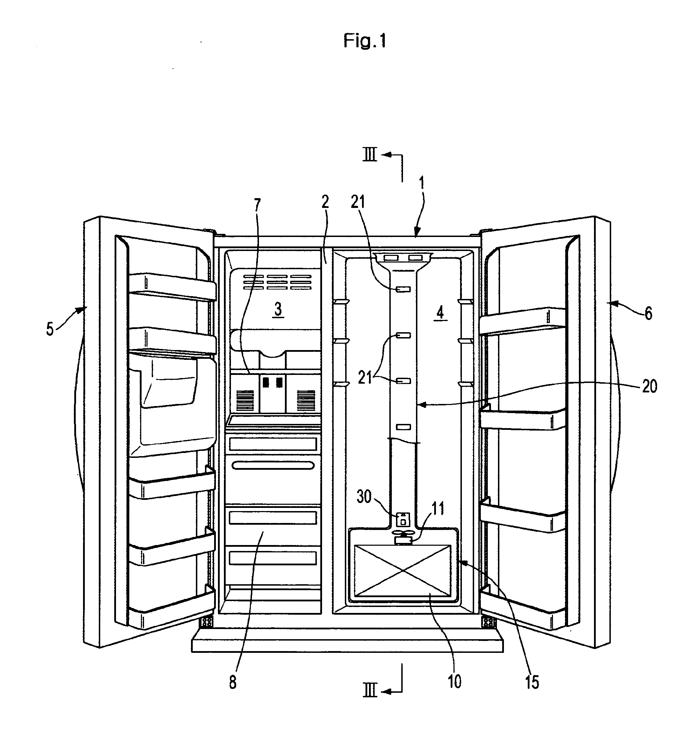

As shown in FIG 1, the refrigerator according to the invention includes a cabinet 1 which has a box structure open at a front side thereof, to define a food storage space, and a partition wall 2 which extends longitudinally in the interior of the cabinet 1, to divide the food storage space of the cabinet 1 into two storage compartments 3 and 4. The refrigerator also includes two doors, 5 and 6, which are hinged and coupled to the front side of the cabinet 1, to open or close the storage compartments 3 and 4, respectively.

Typically, the storage compartments 3 and 4 are used as a freezing compartment for storing food at a temperature of not more than 0 °C (appropriately, between -16 °C and -21 °C), and a refrigerating compartment for storing food at a temperature of more than 0 °C (appropriately, between 3 °C and 5 °C), respectively. Hereinafter, the storage compartment 3 will be referred to as a freezing compartment, and the storage compartment 4 will be referred to as a refrigerating compartment.

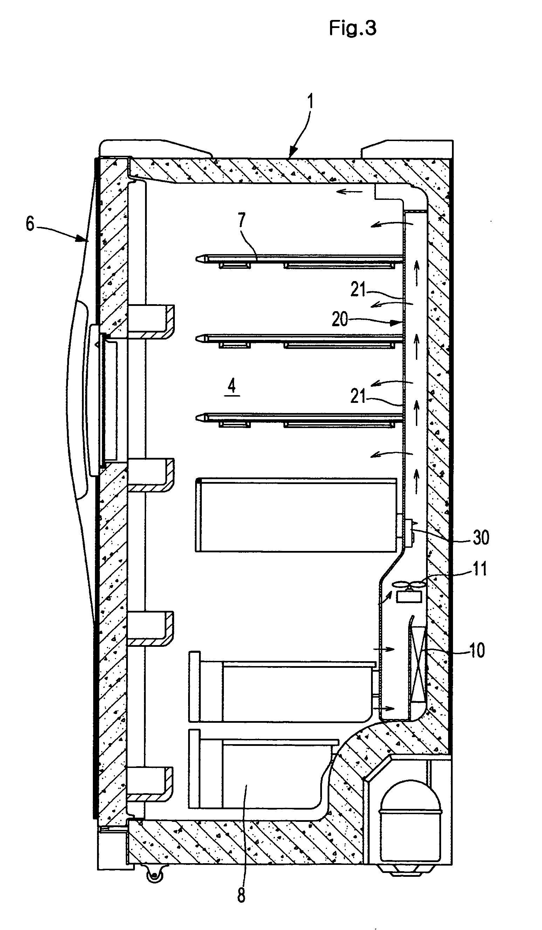

In order to effectively store a variety of food in the freezing compartment 3 and refrigerating compartment 4, a plurality of shelves 7 and storage boxes 8 are disposed in each of the freezing compartment 3 and refrigerating compartment 4. The shelves 7 and storage boxes 8 disposed in the refrigerating compartment 4 will be described with reference to FIG. 3.

A cold air duct 20 is mounted to a rear side of the refrigerating compartment 4. A plurality of cold air outlets 21 are provided at the cold air duct 20 such that the cold air outlets 21 are uniformly spaced apart from one another in a vertical direction, in order to uniformly distribute cold air into the overall space of the refrigerating compartment 4. An evaporator 10 and a cooling fan 11 are also arranged at the rear side of the refrigerating compartment 4, in order to supply cold air into the cold air duct 20.

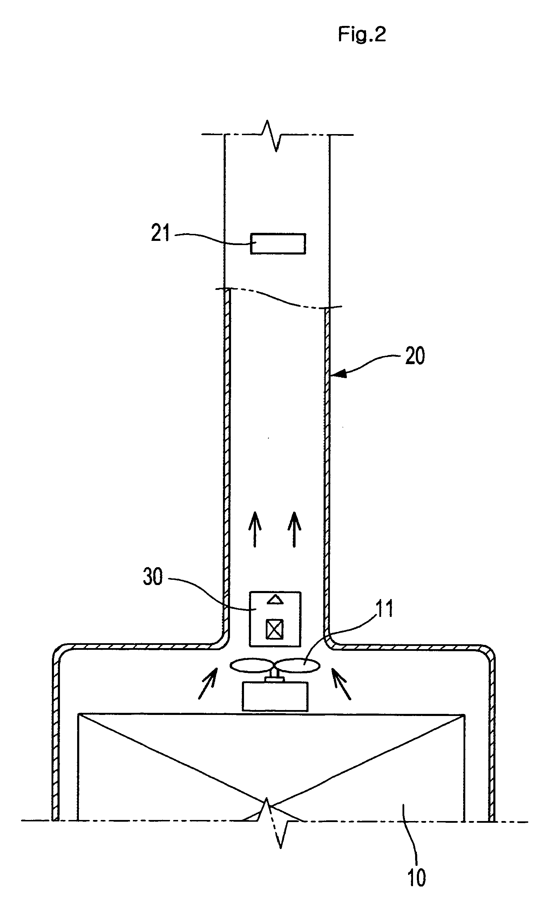

As shown in FIG. 2, the evaporator 10 and cooling fan 11 are arranged at a lower portion of the cold air duct 20, to cause cold air to flow upwardly from the lower portion of the cold air duct 20. At the lower portion of the cold air duct 20, an ion generator 30 is also arranged which generates a large amount of ions to be discharged into the refrigerating compartment 4, so as to kill various bacteria, or to remove airborne dust, and particles present in the air of the refrigerating compartment 4, and to deodorize the refrigerating compartment 4.

The ion generator 30 is configured to generate a large amount of ions using the discharge of plasma, in order to kill various bacteria present in the air and to deodorize.

Accordingly, when the cooling fan 11 operates, air is introduced into the cold air duct 20, and is cooled while passing around the evaporator 10. The cold air is mixed with a large amount of ions generated from the ion generator 30, and is then distributed into the overall portion of the refrigerating compartment 4 through the cold air outlets 21.

Meanwhile, the cold air duct 20 is made of acrylonitrile butadiene styrene (ABS) copolymer having a surface resistivity of 10¹⁴Ω/sq or more. For this reason, the cold air duct 20 may be electrified by the ions generated from the ion generator 30, so that the ions may disappear before emerging from the cold air duct 20. As a result, the amount of discharged ions is reduced.

In order to prevent the amount of discharged ions from being reduced due to the static produced by the ions, an anti-static material may be coated over the inner surface of the cold air duct 20. Alternatively, the same effect may be obtained by increasing the flow velocity of the cold air passing through the cold air duct 20.

However, when an anti-static material having a low surface resistivity is coated over the entire inner surface of the cold air duct 20, the costs and time for the anti-static treatment for increase. On the other hand, where the flow velocity of the cold air passing through the cold air duct 20 is increased, the costs are increased due to a corresponding change in the configuration of the cooling fan 11, and the increased use of electric power.

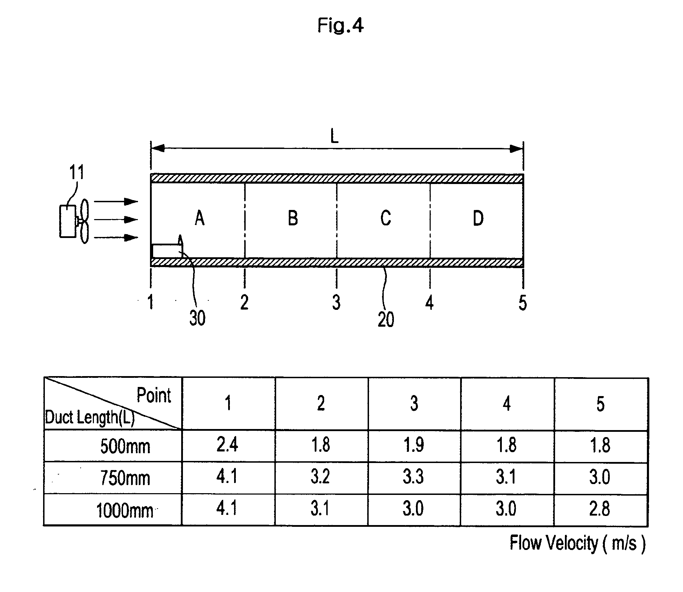

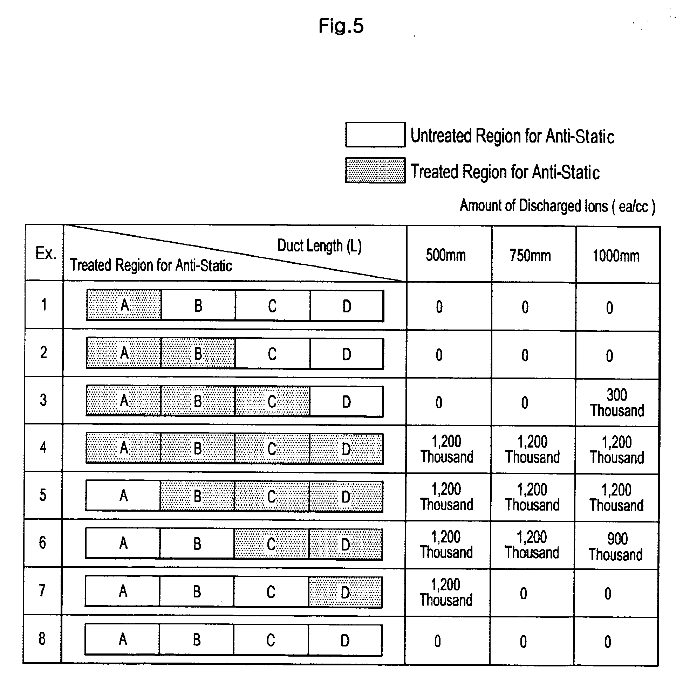

To this end, the invention provides a scheme to prevent the amount of discharged ions from being reduced due to static occurring at the cold air duct 20 without incurring the above-described problems. This will be described with reference to FIGS. 4 and 5.

FIG. 4 shows a table representing flow velocities of cold air respectively measured at various points of the cold air duct where the ion generator is arranged. FIG. 5 shows a table representing a variation in the amount of discharged ions passing through the cold air duct, depending on the size of the area of the cooling duct, which was subjected to an anti-static treatment.

As shown in FIG. 4, three cold air ducts 20 were prepared which have lengths of 500 mm, 750 mm, and 1,000 mm, respectively. An ion generator 30 was then arranged at each cold air duct 20. Each cold air duct 20 is longitudinally divided into four equal portions, to define five points including an inlet and outlet of the cold air duct 20. The flow velocity of the cold air flowing through each cold air duct 20 was then measured at the five points, respectively.

In order to maintain the flow velocity of the cold air flowing through each cold air duct 20 in accordance with operation of the cooling fan 11 arranged in the refrigerator within a desired range at the inlet of the cold air duct 20, namely, the point 1, the initial velocity of the cold air was set to 2.4 m/s in the case of the cold air duct having a length of 500 mm, and to 4.1 m/s in the cases of the cold air ducts respectively having lengths of 750 mm and 1,000 mm. The results of velocity measurement obtained at respective points for each cold air duct are described in the Table of FIG. 4.

FIG. 5 shows the results of an experiment for measuring the amount of ions discharged from each cold air duct when the cold air duct was made of ABS copolymer having a surface resistivity of 10¹⁴Ω/sq or more and coated with an anti-static material having a surface resistivity of 10⁵Ω/sq or less, such as polyethylene (PE), on the inner surface of the cold air duct in one or more regions selected from a region A between the points 1 and 2, a region B between the points 2 and 3, a region C between the points 3 and 4, and a region D between the points 4 and 5. Referring to FIG. 5, when the anti-static material is coated in a region from a point where the velocity of the cold air duct is reduced by 25% or more from the initial velocity of the cold air at the inlet of the cold air duct to the outlet of the cold air duct from which the cold air is outwardly discharged, the ions are generated from the ion generator 30 and discharged from the cold air duct without loss, together with the cold air, and thus, fill the storage compartments.

As shown in the Table of FIG. 5, in Example 2 where the anti-static treatment is carried out only for the regions A and B where the flow velocity of the cold air is high and is not carried out for the regions C and D where the flow velocity of the cold air is low, the ions generated from the ion generator 30 cannot be discharged from the cold air duct because they disappear completely in the cold air duct. On the other hand, in Example 3, the anti-static treatment is carried out only for the regions A to C of each cold air duct and is not carried out for the region D, a small quantity of ions is discharged only in the case of the cold air duct which has a length of 1,000 mm.

Meanwhile in Example 4 where the anti-static treatment is carried out for all regions A to D, or in Example 5 where the treatment is carried out for the regions B to D excluding region A, a large quantity of ions can be discharged from each of the three cold air ducts without loss.

In Example 6, the anti-static treatment is not carried out for the regions A and B, but is carried out for the regions C and D, a sufficient quantity of ions are discharged from the cold air ducts which have lengths of 500 mm and 750 mm, respectively. In this case, however, a slightly insufficient quantity of ions is discharged from the cold air duct, which has a length of 1,000 mm.

In Example 7 when the anti-static treatment is carried out only for the region D and not carried out for the regions A to C, a sufficient quantity of ions can be discharged from the cold air duct which has a length of 500 mm. However, no ions are discharged from the cold air ducts, which have lengths of 750 mm and 1,000 mm, respectively.

On the other hand, when no anti-static treatment is carried out in any region, the three cold air ducts do not discharge any ions.

As apparent from the results of the experiment, it is possible to discharge a sufficient quantity of ions by performing the anti-static treatment only for the region D in the case of the cold air duct having a length of 500 mm, by performing the anti-static treatment for the regions C and D in the case of the cold air duct having a length of 750 mm, and by performing the anti-static treatment for the regions B to D, except for the region A, in the case of the cold air duct having a length of 1,000 mm.

Referring to the Table of FIG. 4, it can be seen that the anti-static treatment is associated with a velocity reduction region where the flow velocity of cold air in the cold air duct having a length of 500 mm is reduced by about 25 % or more from an initial velocity of 2.4 m/s to a velocity of 1.8 m/s. The flow velocity of cold air in the cold air duct having a length of 750 mm or a length of 1,000 mm is reduced from an initial velocity of 4.1 m/s by about 25 % or more to a velocity of 3.08 m/s.

Therefore, when the anti-static treatment is carried out in a portion of the cold air duct extending from a point where the flow velocity of cold air in the cold air duct is reduced by about 25 % or more to the outlet of the cold air duct, irrespective of the length of the cold air duct, the ions generated from the ion generator can be discharged from the cold air duct without loss.

This principle will be described in detail hereinafter. When the cold air duct, in which the ion generator is arranged, is made of a material having a high surface resistivity, such as ABS copolymer, static generated by ions from the ion generator occurs significantly at the inner surface of the cold air duct due to friction. Furthermore, when the flow velocity of cold air in the cold air duct is reduced, the mobility of the ions is decreased, and the time for which the ions are in contact with the inner surface of the cold air duct is increased. As a result, the static by the ions is increased. Accordingly, in the region of the cold air duct where the flow velocity of cold air is reduced from an initial velocity by 25% or more is subjected to an anti-static treatment, the ions can be outwardly discharged without disappearing even when the flow velocity of the ions is reduced because static by the ions does not occur at the inner surface of the cold air duct.

Although the invention has been described in conjunction with an embodiment of a scheme for preventing static from occurring in a cold air duct installed in a refrigerator, the invention may also be applied to other duct systems installed with ion generators, to prevent static from occurring in the duct systems.

As apparent from the above description, the refrigerator according to the invention includes an ion generator arranged at an inlet of a cold air duct having a plurality of cold air outlets such that a large amount of ions generated from the ion generator are uniformly discharged into the overall space of a storage compartment in the refrigerator. Accordingly, the refrigerator of the invention has an effect capable of sterilizing the storage compartment, and thus, storing food in a fresh state.

Also, the cold air duct included in the refrigerator according to the invention has an anti-static-treated structure only in a region where static by ions may easily occur. Accordingly, it is unnecessary to change the configuration of a cooling fan used in the refrigerator, or to treat the overall portion of the cold air duct for anti-static, in order to prevent static from occurring in the cold air duct. Thus, it is possible to reduce the costs and time needed to discharge of a sufficient amount of ions through the cold air duct.

Although the preferred embodiments of the invention have been disclosed for illustrative purposes, those skilled in the art will appreciate that various modifications, additions and substitutions are possible, without departing from the scope and spirit of the invention as disclosed in the accompanying claims.

## Claims

1. A refrigerator, comprising:
at least one storage compartment;
a cold air duct inside the storage compartment;
a cooling fan to discharge cold air into the cold air duct; and
an ion generator to generate ions disposed in the cold air duct,
wherein the ions are discharged into the storage compartment via the cold air duct.

2. The refrigerator according to claim 1, wherein the cold air duct includes an anti-static-treated portion to prevent the ions generated from the ion generator from being lost due to static of the cold air duct by the ions.

3. The refrigerator according to claim 2, wherein the anti-static-treated portion of the cold air duct extends from a point where a flow velocity of the cold air in the cold air duct is reduced from an initial velocity at a cold air inlet of the cold air duct by 25 % or more to a cold air outlet of the cold air duct.

4. The refrigerator according to claim 2, wherein the anti-static treatment is defined by coating the cold air duct with a material having a surface resistance of 10⁵Ω/sq or less on the portion of the cold air duct.

5. The refrigerator according to claim 2, wherein the anti-static treatment is defined by coating polyethylene on the portion of the cold air duct.

6. The refrigerator according to claim 1, wherein the cold air duct includes a plurality of uniformly spaced cold air outlets,
and the ions generated from the ion generator are uniformly distributed into the overall portion of the storage compartment through the cold air outlets.

7. The refrigerator according to claim 6, wherein:
the cooling fan is arranged at a lower portion of the storage compartment; and
the ion generator is arranged at a lower end of the cold air duct.

8. A refrigerator, comprising:
at least one storage compartment;
a cold air duct inside the storage compartment; and
an ion generator to generate ions disposed in the cold air duct,
wherein the ions are discharged into the storage compartment via the cold air duct to sterilize and deodorize air in the storage compartment.
